# EUROPÄISCHE PATENTSCHRIFT

(11) **EP 2 737 607 B1**
(45) Veröffentlichungstag und Bekanntmachung des Hinweises auf die Patenterteilung: **25.09.2019**
(21) Anmeldenummer: 12748686.8
(22) Anmeldetag: 17.08.2012
(51) Int. Cl.: H02K 55/02, H02P 9/00, H02K 9/24, H02K 3/28, H02K 55/04

(54) **SUPRALEITENDE MASCHINE UND VERFAHREN ZU DEREN BETRIEB**
SUPERCONDUCTING MACHINE AND METHOD FOR THE OPERATION THEREOF
MACHINE SUPRACONDUCTRICE ET SON PROCÉDÉ DE FONCTIONNEMENT

(30) Priorität: 08.09.2011 DE 102011082365
(43) Veröffentlichungstag der Anmeldung: 04.06.2014
(73) Patentinhaber: Siemens Aktiengesellschaft, 80333 München (DE)
(72) Erfinder: FRAUENHOFER, Joachim, 90425 Nürnberg (DE); GRUNDMANN, Jörn, 91091 Großenseebach (DE); HARTIG, Rainer, 21614 Buxtehude (DE); KUMMETH, Peter, 91074 Herzogenaurach (DE); VAN HASSELT, Peter, 91058 Erlangen (DE)
(86) Internationale Anmeldenummer: PCT/EP2012/066083
(87) Internationale Veröffentlichungsnummer: WO 2013/034419

(56) Entgegenhaltungen:
- EP-A1- 0 228 012
- DE-A1- 19 931 010
- GB-A- 834 952
- US-A- 3 743 875
- US-A- 4 200 817
- US-A- 4 464 617
- US-A1- 2010 283 318
- US-B1- 7 453 174

## Beschreibung

Die Erfindung betrifft einen Generator in einem Inselnetz als supraleitende Maschine, umfassend als Bauteile einen Stator und einen gegen den Stator rotierbaren Rotor, wobei an wenigstens einem Bauteil, insbesondere dem Rotor, wenigstens eine supraleitende Spule zur Erzeugung von wenigstens zwei magnetischen Polen vorgesehen ist, die über eine Kühleinrichtung gekühlt wird. Daneben betrifft die Erfindung ein Verfahren zum Betrieb einer derartigen supraleitenden Maschine.

Supraleitende Maschinen, die zur Erzeugung der Magnetfelder in den Polen als Erregerwicklungen supraleitende Spulen, insbesondere bestehend aus einem Hochtemperatursupraleitermaterial, umfassen, sind aus dem Stand der Technik bereits bekannt. Bei derartigen elektrischen Maschinen muss die supraleitende Spule über eine Kühleinrichtung, insbesondere aufweisend wenigstens einen Kaltkopf, aktiv gekühlt werden. Steigt die Temperatur der supraleitenden Spule über ihre Betriebstemperatur, ist der Nennerregerstrom zum Betrieb der supraleitenden Maschine nicht mehr erreichbar.

Derartige supraleitende Maschinen, insbesondere Hochtemperatursupraleiter-Synchronmaschinen, werden im generatorischen Betrieb auch als Energiequellen in einem Inselnetz, beispielsweise auf einem Schiff, genutzt. Hier stellt sich das Problem, wie nach einem Störfall, beispielsweise einem Ausfall der Kühlung, grundsätzlich der Betrieb des Stromnetzes eingeschränkt aufrecht erhalten bzw. wieder hergestellt werden kann, da insbesondere bei einem Ausfall der Kühlung der supraleitenden Spule eine Erwärmung der Erregerwicklung auftritt, so dass der Betrieb mit Nennstrom nicht mehr möglich ist.

Zur Lösung dieser Problematik wurde vorgeschlagen, eine Notstromversorgung, beispielsweise ein zusätzliches Dieselaggregat, zur Verfügung zu stellen, die vor dem eigentlich gewünschten (Wieder-)Betrieb auch über einen längeren Zeitraum Leistung für Hilfseinrichtungen zur Kühlung der supraleitenden Spule als Erregerwicklung zur Verfügung stellt. Hierbei wird jedoch eine zusätzliche Generatoreinrichtung benötigt, was aufwendig ist und supraleitende Maschinen, insbesondere Hochtemperatursupraleiter-Synchronmaschinen, zu einer weniger attraktiven Wahl zur Erzeugung von Energie in einem Inselnetz macht.

Aus der US 3 743 875 ist beispielsweise eine supraleitende Synchronmaschine bekannt.

Aus der US 2010/0283318 A1 ist ein Energieverteilungssystem für ein Schiff mit zwei Antrieben bekannt.

Der Erfindung liegt daher die Aufgabe zugrunde, eine Möglichkeit zur Erhöhung der Betriebssicherheit und zur Störfallbehandlung bei als Generatoren in einem Inselnetz eingesetzten supraleitenden Maschinen anzugeben, die demgegenüber verbessert ist.

Zur Lösung dieser Aufgabe ist bei einem Generator der eingangs genannten Art gemäß Anspruch 1 vorgesehen, dass
- an dem jeweils anderen Bauteil, insbesondere dem Stator, in der Ankerwicklung für jede Phase wenigstens zwei parallel verlaufende Wicklungselemente vorgesehen sind, die über wenigstens ein Schaltmittel wahlweise in Reihe oder parallel geschaltet werden können.

Dabei wird im Folgenden zur besseren Darstellung häufig davon ausgegangen, dass entsprechend üblicher Ausgestaltung die Erregerwicklung mit der supraleitenden Spule im Rotor untergebracht ist (Innenpolmaschine). Das bedeutet, der Stator ist in diesem Fall der Anker mit der Ankerwicklung. Jedoch ist die vorliegende Erfindung auch auf die umgekehrte Ausgestaltung anwendbar, dass die Pole mit den supraleitenden Spulen, also die Erregerwicklung, im Stator untergebracht sind und mithin die Ankerwicklung (im Rotor liegend) im Hinblick auf die unterschiedliche Schaltung betrachtet wird (Außenpolmaschine). Der Rotor kann weiterhin als Innenläufer oder als Außenläufer, gegebenenfalls auch als eine Zwischenform ausgebildet sein. Ferner werden die gängigen Begriffe verwendet, wobei ein Wicklungsstrang ein oder mehrere Wicklungselemente einer Wicklung, die einer bestimmten Phase zugeordnet sind, beschreibt; ein Wicklungselement ist ein Teil einer Wicklung, dessen Windungen oder Spulen dauerhaft miteinander verbunden sind. Ferner wird mit dem Begriff Ankerwicklung diejenige Wicklung bezeichnet, welche im Betrieb aus dem äußeren elektrischen Netz Wirkleistung und/oder Blindleistung aufnimmt oder Wirkleistung und/oder Blindleistung an dieses abgibt.

Erfindungsgemäß wird also vorgeschlagen, die Ankerwicklungen, in denen die Energie für das Inselnetz erzeugt wird, also insbesondere die Statorwicklungen, mehrfach parallel in mehreren Wicklungselementen auszuführen, wobei diese über ein Schaltmittel, mithin insbesondere eine Schalteinrichtung, entweder parallel oder in Serie geschaltet werden können. Dies wird für jede Phase gleichermaßen durchgeführt, wobei üblicherweise eine dreiphasige Gesamtwicklung verwendet wird. Sind die Wicklungselemente in Serie geschaltet, wird die Leistung bei gleichem Erregerstrom mit höherer Spannung und niedrigerem Strom als bei einer Parallelschaltung der Wicklungselemente erzeugt. Um den schaltungstechnischen Aufwand in Grenzen zu halten, kann dabei vorteilhafterweise vorgesehen werden, dass eine geradzahlige Anzahl, insbesondere jeweils genau zwei, paralleler Wicklungselemente für jede Phase vorgesehen ist. In diesem Beispiel würde eine Serienschaltung der Wicklungselemente bei dem Nenn-Erregungsstrom die doppelte erzeugte Spannung erlauben. Somit ist es möglich, je nach Weicheisenanteil im Bereich der supraleitenden Spule, also der Erregerwicklung, bereits bei einem Erregerstrom, der ungefähr die Hälfte des Nenn-Erregerstroms beträgt, die normale Nennspannung zu erzeugen. Dabei kann allerdings nur die halbe Nennleistung der Maschine erzeugt werden, da nur der halbe Strom in den in Reihe geschalteten Teilwicklungselementen fließen kann. Somit ermöglicht es die Erfindung, eine Reduzierung des Erregerstroms vorzunehmen und dennoch weiter das Inselnetz mit Energie versorgen zu können. Ein niedrigerer Erregerstrom kann insbesondere auch bei deutlich höheren Temperaturen realisiert werden.

Allgemein bedeutet dies, dass bei einer Verwendung von n parallelen Wicklungselementen pro Phase in der Ankerwicklung, insbesondere also im Stator, bei einer Serienschaltung schon bei ungefähr einem n-tel der Nennerregung die volle Nennspannung mit einer Leistung, die bei einem n-tel der Nennleistung liegt, erzeugt werden kann, wobei der Strom in den Wicklungselementen ebenfalls nur ein n-tel des Nennstroms beträgt.

Eine solche spannungsumschaltbare Wicklung mit den parallel verlaufenden Wicklungselementen kann mit relativ geringem Aufwand realisiert werden, nachdem ohnehin häufig parallele Wicklungselemente eingesetzt werden, um die leistungserzeugenden Wicklungen zu realisieren. Erforderlich ist das Schaltmittel, welches in einem einfachen Fall durch Klemmen in einem Klemmenkasten der supraleitenden Maschine realisiert werden kann, die dann manuell umgeklemmt werden können. Bevorzugt ist es jedoch, das Schaltmittel durch insbesondere ansteuerbare Schalter, beispielsweise Relais, zu realisieren.

Der Vorteil der vorliegenden Erfindung liegt darin, dass auf diese Weise die Maschine bereits bei einem reduzierten Erregerstrom die volle Nennspannung erreichen kann, wobei ein solcher reduzierter Erregerstrom bei erheblich höheren Temperaturen der supraleitenden Spule zugelassen werden kann. Das bedeutet also, beispielsweise auch bei einem Ausfall der Kühleinrichtung kann die supraleitende Maschine in einem Notfallbetriebsmodus bei reduziertem Erregerstrom für eine längere Zeitspanne weiter betrieben werden und die Nennspannung als Netzspannung des Inselnetzes zur Verfügung stellen, wobei beispielsweise im Fall von zwei in Serie geschalteten Wicklungselementen im Notfallbetriebsmodus noch immer die halbe Nennleistung zur Verfügung steht, die im Idealfall nicht nur die Hilfseinrichtungen für die supraleitende Maschine, sondern darüber hinaus auch noch weite Teile des Inselnetzes versorgen kann. Dabei ist der Aufwand für schaltungstechnische Maßnahmen zur Realisierung gering.

In Weiterbildung der vorliegenden Erfindung kann mit besonderem Vorteil vorgesehen sein, dass die supraleitende Maschine eine zwei Betriebsmodi realisierende Steuereinrichtung aufweist, die zum Ansteuern des Schaltmittels zu einer Parallelschaltung der Wicklungselemente für einen Normalbetriebsmodus und zum Ansteuern des Schaltmittels zur Reihenschaltung der Wicklungselemente und zum Ansteuern einer Erregereinrichtung für die supraleitende Spule zum Reduzieren eines Erregerstroms für einen Notfallbetriebsmodus, insbesondere bei Ausfall der Kühleinrichtung, ausgebildet ist.

Es werden also durch die Steuereinrichtung ein Normalbetriebsmodus und ein Notfallbetriebsmodus zur Verfügung gestellt, wobei im Normalbetriebsmodus die übliche Nennleistung bei der Nennspannung zur Verfügung gestellt wird, im Notfallbetriebsmodus jedoch eine reduzierte Leistung möglich ist, nachdem die Steuereinrichtung zweckmäßig auch zu einer Reduzierung des Erregerstroms für die supraleitende Spule ausgebildet ist. Die Reduzierung des Erregerstroms ausgehend von dem Nennerregerstrom, welche durch Ansteuerung einer entsprechenden Erregereinrichtung erfolgen kann, wird dabei so durchgeführt, dass die Nennspannung (bei wie dargelegt entsprechend reduzierter Leistung) aufrechterhalten wird, das Inselnetz also über die supraleitende Maschine weiterbetrieben werden kann. Insbesondere kann vorgesehen sein, dass die Steuereinrichtung zu einer Reduzierung des Erregerstroms für die supraleitende Spule auf einen der Zahl der umzuschaltenden Wicklungselemente entsprechenden Anteil des Nennerregerstroms im Notfallbetriebsmodus ausgebildet ist. Sind also in vorteilhafter Ausgestaltung zwei Wicklungselemente pro Phase vorhanden, kann der Erregerstrom halbiert werden, so dass dieselbe Nennspannung erreicht wird und die Leistung halbiert ist.

Die Steuereinrichtung kann ferner zum Aktivieren des Notfallbetriebsmodus bei einem Ausfall der Kühleinrichtung und/oder bei einer zu geringen Leistung einer Erregereinrichtung für die supraleitende Spule und/oder bei sonstigen Fehlerfällen ausgebildet sein. Solche Fehlerfälle können beispielsweise auch durch geeignete Detektionsmittel festgestellt werden, beispielsweise Sensoren wie Temperatur-, Spannungs- und Strommesser. Dann kann auch in einem Fehlerfall voll automatisch in den Notfallbetriebsmodus umgeschaltet werden, welcher dann auch bei höheren Temperaturen einen, wenn auch eingeschränkten, weiteren Betrieb der supraleitenden Maschine als Generator in dem Inselnetz ermöglicht.

Grundsätzlich ist es bei der vorliegenden Erfindung auch denkbar, dass bei einer geraden Anzahl von mehr als zwei Wicklungselementen bei jeder Phase das Schaltmittel auch zur teilweisen Parallelschaltung und zur teilweisen Reihenschaltung der Wicklungselemente ausgebildet ist, so dass immer gleiche Parallelschaltungen in Reihe bzw. immer gleiche Reihenschaltungen parallel geschaltet sind. Es ist also durchaus denkbar, unterschiedliche Schaltzustände zu realisieren, in denen nur ein Teil der Wicklungselemente in Serie geschaltet ist, ein anderer Teil aber parallel geschaltet ist, wobei darauf zu achten ist, dass jede Unterschalteinheit die korrekte Spannung aufweist. Entsprechend können dann reduzierte Erregerströme so bestimmt werden, dass dennoch weiterhin die Nennspannung erzielt wird. So sind beispielsweise mehrere Notfallbetriebsmodi denkbar, in denen verschiedene reduzierte Leistungen bei gleicher Nennspannung zur Verfügung stehen.

Die supraleitende Maschine kann als eine Synchronmaschine ausgebildet sein und/oder die supraleitenden Wicklungen können aus einem Hochtemperatursupraleitermaterial ausgebildet sein. Hochtemperatursupraleiter-Synchronmaschinen eignen sich besonders zum Betrieb als Generator in einem Inselnetz.

Ferner kann vorgesehen sein, dass Wicklungsstränge der verschiedenen Phasen in einer Sternschaltung oder einer Dreieckschaltung verschaltet sind. Beide Möglichkeiten sind gängig und auch bei der vorliegenden Erfindung denkbar.

Neben der supraleitenden Maschine betrifft die vorliegende Erfindung auch ein Verfahren gemäß Anspruch 5 zum Betrieb einer erfindungsgemäßen supraleitenden Maschine, bei dem in einem Normalbetriebsmodus zur Erzeugung einer Nennleistung die Wicklungselemente parallel geschaltet werden und bei einem Notfallbetriebsmodus, insbesondere bei Ausfall der Kühleinrichtung, zur Erzeugung einer geringeren Leistung als die Nennleistung die Wicklungselemente in Reihe geschaltet werden. Sämtliche Ausführungen bezüglich der supraleitenden Maschine lassen sich analog auf das erfindungsgemäße Verfahren übertragen, das den Normalbetriebsmodus und den Notfallbetriebsmodus und somit die Vorteile der vorliegenden Erfindung realisiert.

Dabei ist insbesondere vorgesehen, dass im Notfallbetriebsmodus die supraleitende Spule mit einem geringeren Erregerstrom als dem Nennstrom betrieben wird, insbesondere derart, dass die Nennspannung der supraleitenden Maschine auch im Notfallbetriebsmodus erzeugt wird. Werden also beispielsweise zwei Wicklungselemente pro Phase verwendet, so kann der Erregerstrom beispielsweise halbiert werden, um die Nennspannung zu erzeugen. Ferner kann vorgesehen sein, dass der Notfallbetriebsmodus bei einem Ausfall oder einer Fehlfunktion der Kühleinrichtung und/oder einer zu geringen Leistung einer Erregereinrichtung für die supraleitende Spule aktiviert wird. Dies kann im Übrigen auch über eine Steuereinrichtung geschehen, über die auch das gesamte erfindungsgemäße Verfahren automatisiert realisiert werden kann.

Mit dem erfindungsgemäßen Verfahren ist es mithin auch möglich, eine supraleitende Maschine, die im generatorischen Betrieb in einem Inselnetz betrieben wird, ausfallsicherer zu gestalten, indem der Notfallbetriebsmodus auch bei höheren Betriebstemperaturen realisiert werden kann und die supraleitende Maschine mit einer reduzierten Leistung weiterbetrieben werden kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze einer erfindungsgemäßen Maschine,
- Fig. 2: die Schaltung der Wicklungselemente in einer Prinzipskizze,
- Fig. 3: eine symbolische Darstellung einer Schaltung im Normalbetriebsmodus, und
- Fig. 4: eine symbolische Darstellung einer Schaltung im Notfallbetriebsmodus.

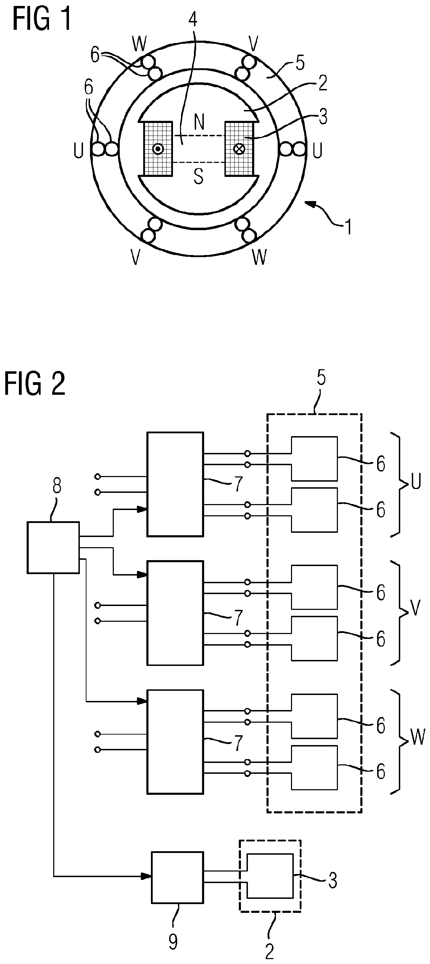

Fig. 1 zeigt eine stark vereinfachte Prinzipskizze einer erfindungsgemäßen supraleitenden Maschine 1, die hier als eine Synchronmaschine ausgebildet ist. Sie umfasst einen Rotor 2, der zur einfacheren Darstellung vorliegend zweipolig dargestellt ist. Zur Erzeugung des magnetischen Flusses an den Polen umfasst der Rotor eine supraleitende Spule 3 als Erregerwicklung, deren Leiter aus einem Supraleitermaterial, insbesondere einem Hochtemperatursupraleitermaterial, bestehen. Die Kühleinrichtung für die supraleitende Spule 3 ist nur teilweise bei 4 angedeutet. Die Realisierung solcher Kühleinrichtungen ist im Stand der Technik weitgehend bekannt und muss hier nicht näher dargelegt werden.

Der als Innenläufer ausgebildete Rotor 2 ist gegen einen Stator 5 drehbar gelagert, der mehrere vereinfacht dargestellte, Statorwicklungen U, V, W (Ankerwicklungen) aufweist, von denen jede einer von drei Phasen zugeordnet ist. Die Statorwicklungen U, V, W weisen jeweils zwei parallel verlaufende Wicklungselemente 6 auf. Die konkrete Führung der Wicklungen, die Zahl der Statorzähne und dergleichen sind auf mannigfaltige, im Stand der Technik grundsätzlich bekannte Arten denkbar, die hier daher nicht näher dargestellt werden müssen.
Fig. 2 zeigt näher die konkrete Verschaltung der Statorwicklungen U, V, W, konkret der Wicklungselemente 6, in einer weiteren Prinzipskizze. Ersichtlich ist für die Wicklungselemente 6 jeder Phase jeweils ein ansteuerbares Schaltmittel 7 vorgesehen, über welches die Wicklungselemente 6 entweder parallel oder in Serie geschaltet werden können. Möglichkeiten zur Ausgestaltung derartiger Schaltmittel sind im Stand der Technik weitgehend bekannt und sollen daher nicht näher dargelegt werden.

Die Maschine 1 umfasst ferner eine Steuereinrichtung 8, die zur Ansteuerung der Schaltmittel 7 und einer Erregereinrichtung 9 zur Erzeugung eines Erregerstroms für die supraleitende Spule 3 ausgebildet ist.

Erhält die Steuereinrichtung 8 nun die Information, dass eine Fehlfunktion vorliegt, was über entsprechende, hier nicht näher gezeigte Detektionsmittel und/oder eine manuelle Eingabe erfolgen kann, ist also beispielsweise die Kühleinrichtung 4 ausgefallen und/oder kann die Erregereinrichtung 9 nicht mit voller Leistung betrieben werden, so schaltet die Steuereinrichtung 8 von einem Normalbetriebsmodus, in dem die Schaltmittel 7 so geschaltet sind, dass die Wicklungselemente 6 parallel geschaltet sind und die Erregereinrichtung 9 den NennErregerstrom zur Verfügung stellt, in einen Notfallbetriebsmodus um, in dem die Schaltmittel 7 so geschaltet sind, dass die Wicklungselemente 6 in Reihe geschaltet sind, und die Erregereinrichtung 9, abhängig vom Weicheisenanteil, nur ungefähr die Hälfte des Nenn-Erregerstroms als Erregerstrom für die supraleitende Spule 3 zur Verfügung stellt.

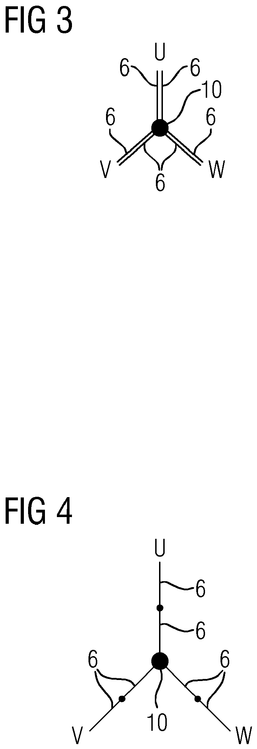

Diese beiden Betriebszustände werden schematisch durch die Figuren 3 und 4 näher dargestellt. Figur 3 zeigt den Normalbetriebsmodus, in dem die Wicklungselemente 6 parallel geschaltet sind, mithin parallel an dem Sternpunkt 10 verbunden sind. Figur 4 zeigt den Notfallbetriebsmodus, in dem die Wicklungselemente 6 in Reihe geschaltet sind und folglich als eine lange Gesamtwicklung an dem Sternpunkt 10 angekoppelt werden.

Nachdem im Notfallbetriebsmodus der auch bei höheren Temperaturen als die übliche Betriebstemperatur der supraleitenden Spule 3 realisierbare halbe Nennerregerstrom benutzt wird, ergibt sich durch die Reihenschaltung der Wicklungselemente 6 dieselbe Nennspannung, jedoch bei halber Maximalleistung, da der in den Teilwicklungselementen 6 erzeugte maximale Strom nur halb so groß ist.

Wird die supraleitende Maschine 1 mithin als Generator an einem Inselnetz betrieben, so kann die supraleitende Maschine 1 bereits mit ungefähr dem halben Erregerstrom die volle Nennspannung erreichen. Dieser reduzierte Erregerstrom kann bei erheblich höheren Temperaturen der supraleitenden Spule 3, mithin auch bei einem Ausfall der Kühleinrichtung 4, zugelassen werden. Es steht mit der halben Leistung dennoch noch eine sehr hohe Leistung zur Verfügung, die für den Notbetrieb genutzt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der durch die folgenden Patentansprüche festgelegten Erfindung zu verlassen.

## Patentansprüche

1. Generator in einem Inselnetz auf einem Schiff, umfassend als Bauteile einen Stator (5) und einen gegen den Stator (5) rotierbaren Rotor (2),
- wobei der Generator als supraleitende Maschine (1) sowie als Synchronmaschine ausgebildet ist,
- wobei an wenigstens einem Bauteil, insbesondere dem Rotor (2), wenigstens eine supraleitende Spule (3) zur Erzeugung von wenigstens zwei magnetischen Polen vorgesehen ist, die über eine Kühleinrichtung (4) gekühlt wird, und
- an dem jeweils anderen Bauteil, insbesondere dem Stator (5), in der Ankerwicklung für jede Phase wenigstens zwei parallel verlaufende Wicklungselemente (6) vorgesehen sind, die über wenigstens ein Schaltmittel (7) wahlweise in Reihe oder parallel geschaltet werden können,
und mit einer eine zwei Betriebsmodi realisierende Steuereinrichtung (8), die zum Ansteuern des Schaltmittels (7) zu einer Parallelschaltung der Wicklungselemente (6) für einen Normalbetriebsmodus und zum Ansteuern des Schaltmittels (7) zur Reihenschaltung der Wicklungselemente (6) und zum Ansteuern einer Erregereinrichtung (9) für die supraleitende Spule (3) zum Reduzieren eines Erregerstroms für einen Notfallbetriebsmodus bei Ausfall der Kühleinrichtung (4) ausgebildet ist, wobei die Steuereinrichtung (8) zum Aktivieren des Notfallbetriebsmodus bei einem Ausfall der Kühleinrichtung (4) und/oder bei einer zu geringen Leistung der Erregereinrichtung (9) für die supraleitende Spule (3) und/oder zu einer Reduzierung des Erregerstroms für die supraleitende Spule (3) auf einen der Zahl der umgeschalteten Wicklungselemente (6) entsprechenden Anteil des Nennerregerstroms im Notfallbetriebsmodus ausgebildet ist.

2. Generator in einem Inselnetz auf einem Schiff nach Anspruch 1,
**dadurch gekennzeichnet, dass** eine geradzahlige Anzahl, insbesondere jeweils zwei, paralleler Wicklungselemente (6) für jede Phase vorgesehen ist.

3. Generator in einem Inselnetz auf einem Schiff nach einem der vorangehenden Ansprüche,
**dadurch gekennzeichnet, dass** der Leiter der supraleitenden Spule (3) aus einem Hochtemperatursupraleitermaterial ausgebildet ist.

4. Generator in einem Inselnetz auf einem Schiff nach einem der vorangehenden Ansprüche,
**dadurch gekennzeichnet, dass** Wicklungsstränge verschiedener Phasen in einer Sternschaltung oder einer Dreiecksschaltung geschaltet sind.

5. Verfahren zum Betrieb eines Generators in einem Inselnetz auf einem Schiff nach einem der vorangehenden Ansprüche, bei dem in einem Normalbetriebsmodus zur Erzeugung einer Nennleistung die Wicklungselemente (6) parallel geschaltet werden und bei einem Notfallbetriebsmodus bei Ausfall der Kühlung supraleitender Spulen zur Erzeugung einer geringeren Leistung als die Nennleistung die Wicklungselemente (6) in Reihe geschaltet werden und ein Erregerstrom reduziert wird.

6. Verfahren nach Anspruch 5,
**dadurch gekennzeichnet, dass** im Notfallbetriebsmodus die supraleitende Spule (3) mit einem geringeren Erregerstrom als dem Nennstrom betrieben wird, insbesondere derart, dass die Nennspannung der supraleitenden Maschine (1) auch im Notfallbetriebsmodus erzeugt wird.

7. Verfahren nach Anspruch 5 oder 6,
**dadurch gekennzeichnet, dass** der Notfallbetriebsmodus bei einem Ausfall oder einer Fehlfunktion der Kühleinrichtung (4) und/oder einer zu geringen Leistung einer Erregereinrichtung (9) für die supraleitende Spule (3) aktiviert wird.

8. Verfahren nach einem der Ansprüche 5 bis 7,
**dadurch gekennzeichnet, dass** die supraleitende Maschine (1) im generatorischen Betrieb in einem Inselnetz betrieben wird.

## Claims

1. Generator in a stand-alone power system on a ship, comprising as components a stator (5) and a rotor (2) capable of rotating with respect to the stator (5),
- wherein the generator is embodied as a superconducting machine (1) and as a synchronous machine,
- wherein on at least one component, in particular the rotor (2), at least one superconducting coil (3) for generating at least two magnetic poles is provided, said coil being cooled by a cooling device (4), and
- on the respective other component, in particular the stator (5), at least two parallel-running winding elements (6) which can be connected either in series or in parallel via at least one switching means (7) are provided in the armature winding for each phase,
and with a control device (8) implementing two operating modes, said control device (8) being designed to set the switching means (7) to parallel connection of the winding elements (6) for a normal operating mode and to set the switching means (7) to series connection of the winding elements (6) and to set an excitation device (9) for the superconducting coil (3) to reduce an excitation current for an emergency operating mode in the event of a failure of the cooling device (4), wherein the control device (8) is designed to activate the emergency operating mode in the event of a failure of the cooling device (4) and/or if the power of the excitation device (9) for the superconducting coil (3) is too low and/or to reduce the excitation current for the superconducting coil (3) to a proportion of the rated excitation current corresponding to the number of switched-over winding elements (6) in the emergency operating mode.

2. Generator in a stand-alone power system on a ship according to claim 1,
**characterised in that** an even number, in particular two in each case, of parallel winding elements (6) is provided for each phase.

3. Generator in a stand-alone power system on a ship according to one of the preceding claims,
**characterised in that** the conductor of the superconducting coil (3) is made of a high-temperature superconductor material.

4. Generator in a stand-alone power system on a ship according to one of the preceding claims,
**characterised in that** phase windings of different phases are connected in star or in delta.

5. Method for operating a generator in a stand-alone power system on a ship according to one of the preceding claims, wherein, in a normal operating mode, the winding elements (6) are connected in parallel to produce a rated power and, in an emergency operating mode in the event of a failure of the cooling of superconducting coils, the winding elements (6) are connected in series to produce a lower power than the rated power and an excitation current is reduced.

6. Method according to claim 5,
**characterised in that**, in the emergency operating mode, the superconducting coil (3) is operated at a lower excitation current than the rated current, in particular such that the rated voltage of the superconducting machine (1) is produced even in the emergency operating mode.

7. Method according to claim 5 or 6,
**characterised in that** the emergency operating mode is activated in the event of failure or malfunction of the cooling device (4) and/or if the power of an excitation device (9) for the superconducting coil (3) is too low.

8. Method according to one of claims 5 to 7,
**characterised in that** the superconducting machine (1) is operated in generator mode in a stand-alone power system.

## Revendications

1. Génératrice dans un réseau en îlot sur une bateau, comprenant, comme éléments constitutifs, un stator (5) et un rotor (2) pouvant tourner par rapport au stator (5),
- dans laquelle la génératrice est constituée sous la forme d'une machine (1) supraconductrice, ainsi que d'une machine synchrone,
- dans laquelle, sur au moins un élément constitutif, notamment sur le rotor (2), est prévue au moins une bobine (3) supraconductrice pour produire au moins deux pôles magnétiques, qui est refroidie par un dispositif (4) de refroidissement et
- sur l'autre élément constitutif, notamment sur le stator (5), sont prévus, dans l'enroulement d'induit pour chaque phase, au moins deux éléments (6) d'enroulement, qui s'étendent en parallèle et qui peuvent être montés par au moins un moyen (7) de commutation, au choix, en série ou en parallèle,
et comprenant un dispositif (8) de commande, qui réalise deux modes de fonctionnement et qui est constitué pour commander le moyen (7) de commutation en un montage parallèle des éléments (6) d'enroulement pour un mode de fonctionnement normal et pour commander le moyen (7) de commutation en un montage série des éléments (6) d'enroulement et pour commander un dispositif (9) d'excitation de la bobine (3) supraconductrice pour réduire un courant d'excitation pour un mode de fonctionnement en cas d'urgence, lorsque le dispositif (4) de refroidissement est défaillant, le dispositif (8) de commande étant constitué pour activer le mode de fonctionnement en cas d'urgence, lorsque le dispositif (4) de refroidissement est défaillant et/ou lorsque le dispositif (9) d'excitation de la bobine (3) supraconductrice a une puissance trop petite et/ou pour réduire le courant d'excitation de la bobine (3) supraconductrice à une proportion, correspondant au nombre des éléments (6) d'enroulement commutés, du courant d'excitation nominal dans le mode de fonctionnement en cas d'urgence.

2. Génératrice dans un réseau en îlot sur un bateau suivant la revendication 1,
**caractérisée en ce qu'**il est prévu un nombre pair, notamment deux enroulements (6) d'enroulement parallèles, pour chaque phase.

3. Génératrice dans un réseau en îlot sur un bateau suivant l'une des revendications précédentes,
**caractérisée en ce que** le conducteur de la bobine (3) supraconductrice est en un matériau supraconducteur à haute température.

4. Génératrice dans un réseau en îlot sur un bateau suivant l'une des revendications précédentes,
**caractérisée en ce que** des branches d'enroulement de phases différentes sont montées suivant un montage en étoile ou suivant un montage en triangle.

5. Procédé pour faire fonctionner une génératrice dans un réseau en îlot sur un bateau suivant l'une des revendications précédentes, dans lequel, dans un mode de fonctionnement normal, pour produire une puissance nominale, on monte les éléments (6) d'enroulement en parallèle, et dans un mode de fonctionnement en cas d'urgence, lorsque le refroidissement de bobine supraconductrice est défaillant, pour produire une puissance plus petite que la puissance nominale, on monte les éléments (6) d'enroulement en série et on réduit un courant d'excitation.

6. Procédé suivant la revendication 5,
**caractérisé en ce que**, dans le mode de fonctionnement en cas d'urgence, on fait fonctionner la bobine (3) supraconductrice à un courant d'excitation plus petit que le courant nominal, notamment de façon à produire la tension nominale de la machine (1) supraconductrice, également dans le mode de fonctionnement en cas d'urgence.

7. Procédé suivant la revendication 5 ou 6,
**caractérisé en ce que** l'on active le mode de fonctionnement en cas d'urgence, s'il se produit une défaillance ou un fonctionnement défectueux du dispositif (4) de refroidissement et/ou une puissance trop petite d'un dispositif (9) d'excitation de la bobine (3) supraconductrice.

8. Procédé suivant l'une des revendications 5 à 7,
**caractérisé en ce que** l'on fait fonctionner la machine (1) supraconductrice en génératrice dans un réseau en îlot.
